# EUROPÄISCHE PATENTANMELDUNG

(11) **EP 3 147 639 A1**
(43) Veröffentlichungstag der Anmeldung: **29.03.2017**
(21) Anmeldenummer: 15187098.7
(22) Anmeldetag: 28.09.2015
(51) Int. Cl.: G01K 7/16

(54) **TEMPERATURKONVERTER FÜR EINE ELEKTRISCHE MASCHINE**

(71) Anmelder: Siemens Aktiengesellschaft, 80333 München (DE)
(72) Erfinder: Medla, Norbert, 91341 Röttenbach (DE); Wöhning, Michael, 97461 Hofheim (DE)

(57) **Zusammenfassung**

Die Erfindung betrifft einen Temperaturkonverter (110,210, 410) für eine elektrischen Maschine (101,201,401,501) mit einem Temperatursensor (202) eines ersten Typs, wobei der Temperaturkonverter (110,210, 410) ein Gehäuse (111), das sich in einer ersten Richtung (7) erstreckt, eine Eingangsschnittstelle (112,212) zum Verbinden mit dem Temperatursensor (202) der elektrischen Maschine (101,201,401,501) für ein Messen einer Temperatur an einem Ort in der elektrischen Maschine (101,201,401,501), eine Ausgangsschnittstelle (113,213,413) zum Verbinden mit einer Auswerteeinrichtung (741) zur Auswertung eines Signals eines zweiten Temperatursensor-Typs und eine Konvertereinrichtung (114) zum Simulieren des zweiten Temperatursensor-Typs an der Ausgangsschnittstelle (113,213, 413) in Abhängigkeit vom Stromwert und/oder Spannungswert eines Eingangssignals vom Temperatursensor (202) an der Eingangsschnittstelle (112,212) aufweist, eine elektrische Maschine (101,201,401,501) mit dem Temperatursensor (202) des ersten Typs, umfassend den Temperaturkonverter (110,210,410) und eine Werkzeugmaschine (670), umfassend den Temperaturkonverter (410) und die elektrische Maschine (401), sowie ein System (603,703,803,903) zu einem Betrieb der elektrischen Maschine (101,201,401,501), umfassend den Temperaturkonverter (110,210,410), die elektrische Maschine (101,201,401,501) und eine Regelungseinrichtung (740) mit der Auswerteeinrichtung (741).

## Beschreibung

Die Erfindung betrifft einen Temperaturkonverter für eine elektrische Maschine mit einem Temperatursensor eines ersten Typs und die elektrische Maschine mit dem Temperatursensor des ersten Typs, wobei die elektrische Maschine
- den Temperatursensor des ersten Typs,
- einen Rotor,
- einen Stator, der in einem Betrieb der elektrischen Maschine über einen Luftspalt mit dem Rotor magnetisch zusammenwirkt, und
- eine Schnittstelle zum Verbinden des Temperatursensors des ersten Typs mit einer Auswerteeinrichtung aufweist.

Des Weiteren betrifft die Erfindung eine Werkzeugmaschine, umfassend den Temperaturkonverter und die elektrische Maschine, sowie ein System zum Betrieb der elektrischen Maschine und eine Verwendung des Temperaturkonverters für die elektrische Maschine mit dem Temperatursensor des ersten Typs.

Eine derartige elektrische Maschine ist aus der EP 2 184 830 B1 bekannt. Bei der elektrischen Maschine kann es sich um einen Elektromotor oder um einen Generator handeln. Insbesondere ist die in der EP 2 184 830 B1 beschriebene Vorrichtung zur Temperaturüberwachung der mehrphasigen Stromwicklung eines Synchronmotors vorgesehen. Derartige Motoren dienen z.B. zum Antrieb einer Motorspindel. Insbesondere hat dort das Überschreiten einer maximal zulässigen Wicklungstemperatur zur Folge, dass neben dem Stator mit der mehrphasigen Stromwicklung zumeist auch der typischerweise permanenterregte Rotor sowie die Lager für die Lagerung des Rotors Schaden nehmen. Grund hierfür ist vor allem der äußerst kompakte Aufbau der Motorspindel bei einer vergleichsweise sehr hohen elektrischen Leistungsdichte und bei einer vergleichsweise ungünstigen Kühlungsmöglichkeit des Elektromotors. In dem genannten Patent ist eine elektrische Maschine beschrieben, die den Temperatursensor des ersten Typs als einen Widerstandstyp beschreibt, der typischerweise einen weitgehend linearen Widerstandsverlauf aufweist und eine sehr genaue Temperaturerfassung ermöglicht, wie sie vor allem für die Maschinensteuerung zur Steuerung und Regelung der elektrischen Maschine benötigt wird. Bei der elektrischen Maschine können neben dem Temperatursensor des ersten Typs weitere Temperatursensoren, z.B. als PTC-Widerstände, vorgesehen sein, die gemäß dem genannten Patent eine starke Widerstandserhöhung bei Überschreiten einer vorgegebenen zu überwachenden Temperatur aufweisen, um Schäden durch Überschreiten einer maximalen Temperatur zu vermeiden. Das EP-Patent beansprucht hierfür eine Vorrichtung zur Temperaturüberwachung einer mehrphasigen Stromwicklung einer elektrischen Maschine, ein Temperatur-Überwachungsmodul zur Anbringung an einer elektrischen Maschine, sowie eine elektrische Maschine mit einem im Bereich einer mehrphasigen Stromwicklung der elektrischen Maschine angeordneten Temperaturüberwachungsmodul.

Eine derartige elektrische Maschine kann auch eine Motorspindel sein, wie sie z.B. in dem Projektierungshandbuch "SINAMICS S120, ECS-Motorspindel 2SP1" der Siemens AG z.B. in der Ausgabe 02/2011 beschrieben sind. Neben den Komponenten der Motorspindel, wie z.B. den Sensoren, ist auch das System zum Betrieb der Motorspindel beschrieben.

Aus der DE 102 05 927 A1 ist ein Elektromotor bekannt, der eine mit elektrischen Leitungen verbindbare Vorrichtung und einen Lüfter umfasst, wobei ein Steckverbinder mit Überwurfmutter in eine Hülse einsteckbar ist und die Hülse mit der Überwurfmutter lösbar formschlüssig verbindbar ist. Dabei ist die Vorrichtung ein Geber und/oder ein Temperatursensor. Hierdurch soll die Fertigung, Montage, Demontage, Reparatur und Wartung des Elektromotors vereinfacht und die Kosten hierbei gesenkt werden. Der Elektromotor mit Geber ist dabei Teil von allgemein bekannten Antrieben, bei denen die elektrische Leitungen an die Geber zur Übertragung von Informationen über Winkellagen des Rotors angeschlossen sind, beispielsweise an einen vom Antrieb ebenfalls umfassten Umrichter. Bei dem Vorschlag gemäß der DE 102 05 927 A1 sind auch Industrie-übliche Anbaudosen verwendbar, indem die Anbaudose in das Gebergehäuse lösbar eingeschraubt werden kann.

Außerdem sind aus der DE 10 2010 046 520 A1 elektrische Maschinen bekannt, die als Elektromotoren in Flurförderzeugen insbesondere für den Fahrantrieb, aber auch für andere Antriebe, beispielsweise eine elektrisch angetriebene Lenkung, eingesetzt werden. Um die hohen Anforderungen an die Zuverlässigkeit und Steuerbarkeit derartiger Elektromotoren erfüllen zu können, ist es erforderlich, die Drehzahl des Motors mit Temperatur während des Betriebs zu erfassen. Zur Erfassung der Drehzahl hat sich ein mit einem Geberrad zusammen wirkender Drehzahlgeber bewährt. Zur Erfassung der Motortemperatur ist das Erfassen der Temperatur einer Wicklung des Elektromotors mit einem Platin- oder Halbleitersensor bekannt. Derartige Sensoren werden in die Wicklung eingelegt und häufig auch mit dieser vergossen. Es ist daher in der Regel nicht ohne Weiteres möglich, einen defekten Temperatursensor auszutauschen. Stattdessen ist ein Austausch des gesamten Elektromotors oder zumindest wesentlicher, kostspieliger Baugruppen desselben erforderlich. Um einen Elektromotor zum Antrieb eines Flurfahrzeugs zur Verfügung zu stellen, bei dem eine Drehzahl- und Temperaturerfassung möglich ist, und bei dem Defekte einfach behoben werden können, schlägt die DE 10 2010 0460520 A1 ein Sensormodul mit einem Sensormodul-Gehäuse vor, in oder an dem der Temperatursensor und der Drehzahlgeber angeordnet sind, und eine Befestigungseinrichtung zur Befestigung des Sensormoduls in einer vorgegebenen Position in oder an einem Gehäuse des Elektromotors, wobei der Temperatursensor ein berührungsloser Temperatursensor ist und das Sensormodul ein als Einheit austauschbares Ersatzteil bildet. Weiterhin wird in der DE 10 2010 046 520 A1 beispielsweise vorgeschlagen, dass das Sensormodul einen einzigen elektrischen Steckverbinder zur Versorgung des Drehzahlgebers und aller vorhandenen Temperatursensoren und zur Übertragung der Signale der Temperatursensoren und des Drehzahlgebers aufweist. Mit der Versorgung ist dabei eine elektrische Spannungs- und/oder Stromversorgung gemeint. Die Bündelung aller erforderlichen elektrischen Verbindungen in einem einzigen elektrischen Steckverbinder vereinfacht ein Austauschen des Sondermoduls erheblich und ist zudem weniger störanfällig als mehrere getrennte Verbindungen. Es wird außerdem vorgeschlagen, dass der Steckverbinder nur zwei elektrische Kontakte aufweist und das Sensormodul zur Übertragung der Signale der vorhandenen Temperatursensoren und des Drehzahlgebers über die Kontakte im Multiplex-Verfahren und/oder über ein Busprotokoll ausgebildet ist. Die genannten Übertragungstechniken können dabei durch elektronische Bauteile innerhalb des Sensormoduls realisiert werden, die auf einer zum Sensormodul gehörenden Leiterplatte angeordnet sind. Dadurch wird die Integration des Sensormoduls in ein elektrisches Steuersystem des Flurfahrzeugs weiter vereinfacht und die Störanfälligkeit der Steckverbindungen wird weiter reduziert.

Des Weiteren ist auch aus der JP 8-261792-A bekannt, dass man Kabel einspart und damit Kosten reduziert, indem man die Temperaturdaten des Temperatursensors in einem Motor zusammen mit Positionsdaten des Encoders mit Hilfe einer seriellen Kommunikation überträgt. Dazu ist die Temperatursensorleitung im Motor mit einem Temperatursensor-Eingangsterminal des Drehzahlgebers verbunden. Das Temperatursensor-Eingangssignal, welches durch das Temperatursensor-Eingangsterminal eingegangen ist, wird an einem Analog-Digital-Konverter als eine digitale Konverterschaltung in digitalisierte Temperaturdaten konvertiert. Die digitalisierten Temperaturdaten werden mit den digitalisierten Positionsdaten in einem Mikrocomputer synthetisiert und durch ein serielles Signal einer Kommunikationsschaltung zum Motor-Controller übertragen.

Der Erfindung liegt die Aufgabe zugrunde, einen technischen Beitrag zur Auswertung einer Temperatur der elektrischen Maschine zu leisten, mit dem die Auswertung mit einer kostengünstigen Auswerteeinrichtung in hoher Qualität erfolgen kann.

Die Aufgabe wird durch einen Temperaturkonverter mit den Merkmalen des Anspruchs 1 gelöst. Ein erfindungsgemäßer Temperaturkonverter für eine elektrische Maschine mit einem Temperatursensor eines ersten Typs weist
- ein Gehäuse, das sich in einer ersten Richtung erstreckt,
- eine Eingangsschnittstelle zum Verbinden mit dem Temperatursensor der elektrischen Maschine für ein Messen einer Temperatur an einem Ort in der elektrischen Maschine,
- eine Ausgangsschnittstelle zum Verbinden mit einer Auswerteeinrichtung zur Auswertung eines Signals eines zweiten Temperatursensor-Typs und
- eine Konvertereinrichtung zum Simulieren des zweiten Temperatursensor-Typs an der Ausgangsschnittstelle in Abhängigkeit vom Stromwert und/oder Spannungswert eines Eingangssignals vom Temperatursensor an der Eingangsschnittstelle auf.

Die Aufgabe wird auch durch eine elektrische Maschine mit den Merkmalen nach Anspruch 10 gelöst.

Eine erfindungsgemäße elektrische Maschine mit einem Temperatursensor eines ersten Typs umfasst einen erfindungsgemäßen Temperaturkonverter, wobei die elektrische Maschine
- den Temperatursensor des ersten Typs,
- einen Rotor,
- einen Stator, der in einem Betrieb der elektrischen Maschine über einen Luftspalt mit dem Rotor magnetisch zusammenwirkt, und
- eine Schnittstelle zum Verbinden des Temperatursensors des ersten Typs mit der Auswerteeinrichtung aufweist,
wobei die Eingangsschnittstelle des Temperaturkonverters mit der Schnittstelle der elektrischen Maschine verbunden ist.

Die Aufgabe wird auch durch eine Werkzeugmaschine mit den Merkmalen nach Anspruch 12 gelöst.

Eine erfindungsgemäße Werkzeugmaschine umfasst einen erfindungsgemäßen Temperaturkonverter, wobei die Werkzeugmaschine eine elektrische Maschine umfasst, die
- den Temperatursensor des ersten Typs,
- einen Rotor,
- einen Stator, der in einem Betrieb der elektrischen Maschine über einen Luftspalt mit dem Rotor magnetisch zusammenwirkt, und
- eine Schnittstelle zum Verbinden des Temperatursensors mit einer Auswerteeinrichtung aufweist,
wobei die Eingangsschnittstelle des Temperaturkonverters mit der Schnittstelle der elektrischen Maschine verbunden ist.

Die Aufgabe wird auch durch ein System mit den Merkmalen nach Anspruch 13 gelöst.

Ein erfindungsgemäßes System zu einem Betrieb einer elektrischen Maschine umfasst einen erfindungsgemäßen Temperaturkonverter, eine elektrische Maschine und eine Regelungseinrichtung, wobei die elektrische Maschine
- den Temperatursensor des ersten Typs,
- einen Rotor,
- einen Stator, der in einem Betrieb der elektrischen Maschine über einen Luftspalt mit dem Rotor magnetisch zusammenwirkt, und
- eine Schnittstelle zum Verbinden des Temperatursensors mit der Auswerteeinrichtung aufweist,
- wobei die Regelungseinrichtung die Auswerteeinrichtung für die Auswertung des Signals des zweiten Temperatursensor-Typs aufweist,
- wobei die Auswerteeinrichtung eine Schnittstelle zum Verbinden des zweiten Temperatursensor-Typs mit der Auswerteeinrichtung aufweist,
- wobei die Schnittstelle der elektrischen Maschine mit der Eingangsschnittstelle des Temperaturkonverters verbunden ist und die Ausgangsschnittstelle des Temperaturkonverters mit der Schnittstelle der Auswerteeinrichtung verbunden ist.

Die Aufgabe wird auch durch eine Verwendung mit den Merkmalen nach Anspruch 15 gelöst.

Bei einer erfindungsgemäßen Verwendung eines erfindungsgemäßen Temperaturkonverters wird der Temperaturkonverter für die elektrische Maschine mit dem Temperatursensor des ersten Typs zum Simulieren des zweiten Temperatursensor-Typs an der Ausgangsschnittstelle des Temperaturkonverters in Abhängigkeit vom Stromwert und/oder Spannungswert des Eingangssignals vom Temperatursensor an der Eingangsschnittstelle des Temperaturkonverters verwendet.

Die Aufgabe wird erfindungsgemäß vorteilhaft gelöst, indem der erfindungsgemäße Temperaturkonverter vorteilhaft kostengünstig in einer hohen Qualität den zweiten Temperatursensor-Typ an der Ausgangsschnittstelle in Abhängigkeit vom Stromwert und/oder Spannungswert des Eingangssignals vom Temperatursensor an der Eingangsschnittstelle simulieren kann. So kann eine Auswerteeinrichtung zur Auswertung eines Signals eines zweiten Temperatursensor-Typs vorteilhaft kostengünstig in einer hohen Qualität die an dem Ort in der elektrischen Maschine gemessene Temperatur auswerten, obwohl die elektrische Maschine den Temperatursensor des ersten Typs aufweist.

Zum Simulieren des zweiten Temperatursensor-Typs kann in einem Betrieb des Temperaturkonverters an der Ausgangsschnittstelle ein Ausgangssignal vorhanden sein, dessen Strom- und/oder Spannungswert abhängig vom Strom- und/oder Spannungswert des Eingangssignals ist. Hierzu kann an die Ausgangsschnittstelle eine Spannung oder ein Strom angelegt werden und der Strom- und/oder der Spannungswert des Ausgangssignals gemessen werden. Wird eine Spannung einer Konstantspannungsquelle an der Ausgangsschnittstelle angelegt, so gibt der gemessene Stromwert Auskunft über den elektrischen Widerstand der vom Temperaturkonverter für die gemessene Temperatur simuliert wird. Entsprechendes gilt bei Anlegen eines Stromes einer Konstantstromquelle und Messen des Spannungswertes. Es können auch die angelegten, insbesondere die angelegten und gemessenen, Spannungs- oder Stromwerte und die gemessenen Strom- oder Spannungswerte verwendet werden, um den elektrischen Widerstand zu bestimmen, der vom Temperaturkonverter für die gemessene Temperatur simuliert wird.

Der Temperaturkonverter kann vorteilhaft zur Montage an einer elektrischen Maschine geeignet sein. So kann der Temperaturkonverter vorteilhaft kostengünstig in einer hohen Qualität an der elektrischen Maschine befestigt werden, ohne dass hierzu die elektrische Maschine geöffnet werden muss.

Der Temperaturkonverter kann zum Verbinden, d.h. zum elektrischen Verbinden, an der Eingangsschnittstelle einen Steckverbinder und an der Ausgangsschnittstelle einen Steckverbinder aufweisen. So kann vorteilhaft kostengünstig in einer hohen Qualität der Temperaturkonverter mit dem Temperatursensor der elektrischen Maschine und mit der Auswerteeinrichtung verbunden werden. Es kann z.B. der zeitliche Aufwand hierfür vorteilhaft klein sein.

Senkrecht zu der ersten Richtung verlaufende Querschnittsflächen erstrecken sich in einer Ebene, die durch eine zweite Richtung und eine dritte Richtung aufgespannt sind. Die zweite Richtung und die dritte Richtung verlaufen senkrecht zu der ersten Richtung.

Eine erfindungsgemäße elektrische Maschine weist den weiteren Vorteil auf, dass sie mit dem Temperatursensor des ersten Typs vorteilhaft kostengünstig in einer hohen Qualität in großen Stückzahlen hergestellt werden kann. Es können vorteilhaft kostengünstig vorhandene Temperatursensoren für die elektrische Maschine verwendet werden. Der Temperatursensor kann so vorteilhaft in einer am Stator befestigten Wicklung eingelegt sein und/oder mit der Wicklung vergossen sein.

Der Rotor der elektrischen Maschine kann eine Einrichtung aufweisen, um über den Luftspalt mit dem Stator, insbesondere mit der am Stator befestigten Wicklung, magnetisch zusammenwirken zu können.

Bei einem Betrieb einer erfindungsgemäßen elektrischen Maschine als Generator wird der Rotor durch mechanische Energie in Bewegung versetzt. Durch das magnetische Zusammenwirken von Rotor und Stator kann die mechanische Energie in elektrische Energie umgewandelt werden. Die elektrische Energie kann an der Wicklung, insbesondere an mehreren Wicklungen, die am Stator befestigt ist/sind, für einen elektrischen Verbraucher entnommen werden.

Bei einem Betrieb einer erfindungsgemäßen elektrischen Maschine als Motor wird über die Wicklung, insbesondere über mehrere Wicklungen, elektrische Energie zugeführt und durch das magnetische Zusammenwirken von Stator und Rotor elektrische Energie in mechanische Energie umgewandelt. Dabei wird der Rotor in Bewegung versetzt und kann mechanische Energie an einen mechanischen Verbraucher abgeben.

Eine erfindungsgemäße Werkzeugmaschine weist den weiteren Vorteil auf, dass vorteilhaft keine Änderungen an den elektrischen Komponenten der Werkzeugmaschine vorgenommen werden müssen. Vorteilhaft kostengünstig kann der Werkzeugmaschinenhersteller auch bei einer Werkzeugmaschine, die mit der den Temperatursensor des ersten Typs aufweisenden elektrischen Maschine ausgestattet werden soll, vorteilhaft denselben Bauraum in der Werkzeugmaschine wie für eine elektrische Maschine mit dem zweiten Temperatursensor-Typ vorsehen, insbesondere benötigt der Werkzeugmaschinenhersteller auch außerhalb der Werkzeugmaschine vorteilhaft keinen zusätzlichen Bauraum.

Eine Werkzeugmaschine ist eine mechanisierte und mehr oder weniger automatisierte Fertigungseinrichtung, die durch eine relative Bewegung zwischen Werkstück und Werkzeug eine vorgegebene Form am Werkstück oder eine Veränderung einer vorgegebenen Form an einem Werkstück erzeugt. Die elektrische Maschine kann eine Motorspindel sein, um das Werkstück oder das Werkzeug durch eine elektrische Maschine in Bewegung zu versetzen.

Ein erfindungsgemäßes System zum Betrieb der elektrischen Maschine weist den weiteren Vorteil auf, dass die elektrische Maschine kostengünstig in einer hohen Qualität auch gegen eine elektrische Maschine mit einem Temperatursensor vom zweiten Typ ausgetauscht werden kann oder diese ersetzen kann. Es muss hierzu die Auswerteeinrichtung vorteilhafterweise nicht angepasst oder ausgetauscht werden.

Vorteilhafte Ausgestaltungen der Erfindung sind in den abhängigen Ansprüchen angegeben. Es wird hierbei vorteilhaft ein technischer Beitrag zur vorteilhaften Ausgestaltung geleistet, mit dem die Auswertung einer Temperatur einer elektrischen Maschine mit einer kostengünstigen Auswerteeinrichtung in hoher Qualität erfolgen kann.

So ist eine Ausgestaltung eines erfindungsgemäßen Temperaturkonverters vorteilhaft, bei der der Temperaturkonverter Steckverbinder eines Verbindungssystems miteinander verbindbarer erster und zweiter Steckverbinder umfasst, wobei der Temperaturkonverter an der Eingangsschnittstelle einen ersten Steckverbinder des Verbindungssystems und an der Ausgangsschnittstelle einen zweiten Steckverbinder des Verbindungssystems aufweist. So sind vorteilhaft für das Verwenden des Temperaturkonverters keine anderen, insbesondere zusätzlichen Steckverbinder, für das Verbinden des Temperaturkonverters mit der elektrischen Maschine und das Verbinden der Auswerteeinrichtung mit dem Temperaturkonverter notwendig. Insbesondere können die bisher bei einem System zum Betrieb einer elektrischen Maschine verwendeten Stecker, Kabel etc. bei einem erfindungsgemäßen System weiterhin verwendet werden.

In einer weiteren vorteilhaften Ausgestaltung eines erfindungsgemäßen Temperaturkonverters ist der Temperaturkonverter über die Eingangsschnittstelle an der elektrischen Maschine befestigbar. Die Eingangsschnittstelle dient somit nicht nur zum Verbinden, d.h. elektrischen Verbinden, sondern auch zum mechanischen Befestigen des Temperaturkonverters an der elektrischen Maschine. So sind vorteilhaft keine zusätzlichen Befestigungsmittel notwendig.

In einer weiteren vorteilhaften Ausgestaltung eines erfindungsgemäßen Temperaturkonverters weisen senkrecht zu der ersten Richtung verlaufende Querschnittsflächen des Gehäuses Hüllkurven auf, die entlang der ersten Richtung überwiegend identisch sind. So kann vorteilhaft ein großer Innenraum des Gehäuses für die Konvertereinrichtung zur Verfügung gestellt werden.

In einer weiteren vorteilhaften Ausgestaltung eines erfindungsgemäßen Temperaturkonverters erstreckt sich das Gehäuse zwischen einer ersten und einer zweiten Stirnseite des Temperaturkonverters entlang der ersten Richtung, wobei die erste Stirnseite die Eingangsschnittstelle aufweist. So können vorteilhaft der Temperaturkonverter und die elektrische Maschine in der ersten Richtung der elektrischen Maschine und des Temperaturkonverters vorteilhaft platzsparend hintereinander angeordnet werden.

In einer weiteren vorteilhaften Ausgestaltung eines erfindungsgemäßen Temperaturkonverters weist die Eingangsschnittstelle Leiter zur Energieversorgung eines Bauteils der elektrischen Maschine auf. So muss vorteilhaft die elektrische Maschine keine zusätzliche Schnittstelle zum Anschließen einer Energieversorgung für das Bauteil der elektrischen Maschine aufweisen. Die Ausgangsschnittstelle kann Leiter zur Energieversorgung des Bauteils der elektrischen Maschine aufweisen. So kann vorteilhaft ein erfindungsgemäßer Temperaturkonverter über die Leiter mit Energie versorgt werden. So sind außer einem erfindungsgemäßen Temperaturkonverter keine weiteren Komponenten notwendig, um anstelle einer elektrischen Maschine mit einem Temperatursensor des zweiten Typs die elektrische Maschine mit dem Temperatursensor des ersten Typs zu verwenden.

In einer weiteren vorteilhaften Ausgestaltung eines erfindungsgemäßen Temperaturkonverters ist der Temperaturkonverter nur zum Simulieren des zweiten Temperatursensor-Typs hergestellt. So kann der Temperaturkonverter vorteilhaft mit geringem Herstellungsaufwand zur Verfügung gestellt werden, da eine nachträgliche Änderung des zweiten Temperatursensor-Typs nach dessen Herstellung nicht mehr vorgesehen werden muss. Vorteilhaft muss an einem hergestellten erfindungsgemäßen Temperaturkonverter der zweite Temperatursensor-Typ nicht eingestellt werden, z.B. durch ein Abändern der Konvertereinrichtung, indem z.B. in einem Festwertspeicher der Konvertereinrichtung ein Wert und/oder eine elektrische Schaltungsanordnung geändert wird. Vorteilhaft kann bei einem erfindungsgemäßen Temperaturkonverter auf einstellbare Bauteile und änderbare Festwertspeicher für den zweiten Temperatursensor-Typ verzichtet werden.

In einer weiteren vorteilhaften Ausgestaltung eines erfindungsgemäßen Temperaturkonverters erzeugt der Temperaturkonverter zum Simulieren des zweiten Temperatursensor-Typs zwischen zwei Leitern der Ausgangsschnittstelle einen Widerstandswert, der einem Widerstandswert des zweiten Temperatursensor-Typs bei einer Temperatur entspricht, die von der Temperatur an dem Ort in der elektrischen Maschine um maximal 10 K, insbesondere 5 K, abweicht. So kann vorteilhaft eine Temperaturänderung an dem Ort in der elektrischen Maschine kontinuierlich mit dem Temperaturkonverter verfolgt werden. Insbesondere kann bei einer maximalen Abweichung von 5 K bei einem erfindungsgemäßen System die elektrische Maschine vorteilhaft betrieben werden, indem z.B. Einflüsse einer Temperaturänderung auf eine Drehzahl der elektrischen Maschine mit der Regelungseinrichtung ausgeregelt werden und so die Drehzahl bei den kontinuierlichen Temperaturänderungen vorteilhaft konstant bleibt.

Die Konvertereinrichtung kann Wertepaare einer Kennlinie, insbesondere einer typischen Kennlinie, des Widerstandswertes des zweiten Temperatursensor-Typs abhängig von der Temperatur aufweisen. So kann vorteilhaft durch die Wertepaare die Kennlinie des zweiten Temperatursensor-Typs zum Simulieren des zweiten Temperatursensor-Typs nachgebildet werden. Die zu den Wertepaaren gehörige Temperatur kann in den Datenblättern der Sensoren z.B. als T_{amb} bezeichnet sein, da diese die Temperatur des Bereichs bzw. Ortes ist, der den Temperatursensor umgibt. Entsprechend kann die Konvertereinrichtung Wertepaare des Temperatursensors des ersten Typs zum Ermitteln der gemessenen Temperatur an dem Ort in der elektrischen Maschine aus dem gemessenen Strom- und/oder dem gemessenen Spannungswert des Eingangssignals des Temperaturkonverters aufweisen. Mit der gemessenen Temperatur kann dann der an der Ausgangsschnittstelle zu der Temperatur in der elektrischen Maschine zu erzeugende Widerstand des zweiten Temperatursensor-Typs ermittelt werden. Alternativ kann die Konvertereinrichtung auch Wertepaare zur direkten Ermittlung des zu erzeugenden Widerstands aus dem gemessenen Strom- und/oder dem gemessenen Spannungswert des Eingangssignals aufweisen. Alternativ könnte die Konvertereinrichtung die Kennlinien auch als eine Formel oder mehrere Formeln aufweisen, falls die Rechenzeit der Konvertereinrichtung für die Berechnung mit der einen Formel oder den mehreren Formeln den zeitlichen Anforderungen des Betriebs der elektrischen Maschine, insbesondere mit einem erfindungsgemäßen System, genügt.

Die Konvertereinrichtung kann eine Kennlinie des Widerstands bzw. Wertepaare des zweiten Temperatursensor-Typs abhängig von der Temperatur aufweisen, die bezüglich Fertigungsschwankungen bei dem Temperatursensor des ersten Typs minimale Abweichung der an dem Ort gemessenen Temperatur von der tatsächlichen Temperatur an dem Ort in der elektrischen Maschine aufweist oder die Kennlinie bzw. die Wertepaare sind identisch mit der Kennlinie bzw. den Wertepaaren, die in der Auswerteeinrichtung für den zweiten Temperatursensor-Typ vorhanden sind. So kann vorteilhaft die Auswerteeinrichtung auch die absolute Temperatur mit vorteilhaft hoher Genauigkeit auswerten. Vorteilhaft können so mindestens Fertigungsschwankungen des zweiten Temperatursensor-Typs, wie sie z.B. normalerweise auftreten würden, vermieden werden. Fertigungsschwankungen des Temperatursensors des ersten Typs können vorteilhaft geringer sein, z.B. bei einem Temperatursensor PT1000, oder deren Einfluss, wie in diesen Absatz beschrieben, minimiert werden.

In einer weiteren vorteilhaften Ausgestaltung eines Temperaturkonverters ist der zweite Temperatursensor-Typ ein KTY-Temperatursensor. Es kann so vorteilhaft das simulierte Signal von Auswerteeinrichtungen ausgewertet werden, die standardmäßig ein Signal eines KTY-Temperatursensors auswerten. Vorteilhaft kann das Ausgangssignal von der Ausgangsschnittstelle über eine vorteilhaft lange Übertragungsstrecke übertragen werden, da bei dem KTY-Temperatursensor die Änderung des Strom- und/oder Spannungswertes bei einer Temperaturänderung vorteilhaft groß ist, so dass trotz Veränderung des Signals durch die Übertragung über die lange Übertragungsstrecke die Auswerteeinrichtung die Temperatur vorteilhaft ermitteln kann.

In einer weiteren vorteilhaften Ausgestaltung einer erfindungsgemäßen elektrischen Maschine mit dem Temperatursensor des ersten Typs erstreckt sich der Temperaturkonverter innerhalb einer Hüllkurve, wobei die Hüllkurve eine Hüllkurve einer Projektion aller Komponenten der, insbesondere als eine Motorspindel ausgeführten, elektrischen Maschine in einer Richtung ist. So ist vorteilhaft ein zusätzlicher Platzbedarf für die elektrische Maschine mit dem Temperaturkonverter höchstens in der Richtung notwendig, die die erste Richtung ist. So kann die elektrische Maschine mit dem Tempertaturkonverter in einem Raum montiert werden, in dem sie nur in der ersten Richtung einen zusätzlichen Platzbedarf benötigt. Vorteilhafterweise kann bei einer elektrischen Maschine, die eine rotierende elektrische Maschine ist, die erste Richtung parallel zur Drehachse der Welle der rotierenden elektrischen Maschine verlaufen. Der Temperaturkonverter befindet sich so vorteilhaft weit von einem ersten Ende der rotierenden elektrischen Maschine entfernt, an dem die Welle im Betrieb als Motor mechanische Energie abgibt. So kann der Temperaturkonverter vorteilhaft vor mechanischen Einwirkungen oder Einwirkungen von Fluiden geschützt werden, die im Betrieb der rotierenden, insbesondere als eine Motorspindel ausgeführten, elektrischen Maschine an deren erstem Ende auftreten.

Der Temperaturkonverter kann auch innerhalb einer ersten Erstreckung der, insbesondere als eine Motorspindel ausgeführten, elektrischen Maschine vorhanden sein, wobei die erste Erstreckung sich von einem ersten Ende der elektrischen Maschine entlang der ersten Richtung zu einem zweiten Ende der elektrischen Maschine erstreckt, insbesondere umfasst die erste Erstreckung auch alle optional an der elektrischen Maschine an einer Erweiterungsschnittstelle befestigbare Komponenten. So ist vorteilhaft kein zusätzlicher Platzbedarf für die elektrische Maschine mit dem Temperaturkonverter notwendig. Vorteilhafterweise kann dabei bei einer elektrischen Maschine, die eine rotierende elektrische Maschine ist, die erste Richtung parallel zur Drehachse der Welle der rotierenden elektrischen Maschine verlaufen. Der Temperaturkonverter befindet sich so vorteilhaft weit von einem ersten Ende der rotierenden elektrischen Maschine entfernt, an dem die Welle im Betrieb als Motor mechanische Energie abgibt. So kann der Temperaturkonverter vorteilhaft vor mechanischen Einwirkungen oder Einwirkungen von Fluiden geschützt werden, die im Betrieb der rotierenden elektrischen Maschine an deren erstem Ende auftreten.

Der Temperaturkonverter kann z.B. dadurch innerhalb der ersten Erstreckung vorhanden sein, dass die, insbesondere als eine Motorspindel ausgeführte, elektrische Maschine eine pneumatische Löseeinheit als Komponente oder optionale Komponente aufweist, die einen Raum in der Hüllkurve nur teilweise ausfüllt.

In einer weiteren vorteilhaften Ausgestaltung eines erfindungsgemäßen Systems zum Betrieb einer elektrischen Maschine, ist die Auswerteeinrichtung nur für die Auswertung des Signals des zweiten Temperatursensor-Typs programmiert. So kann vorteilhaft die Auswerteeinrichtung Firmware und/oder ein Bedienerprogramm für eine Inbetriebnahme oder dem Betrieb des Systems aufweisen, die nur Programmteile für den Temperatursensor des ersten Typs aufweisen. Es müssen vorteilhaft keine Programmteile für den zweiten Temperatursensor-Typs oder eine Wahlmöglichkeit, insbesondere im Bedienerprogramm, für verschiedene Temperatursensoren vorhanden sein.

Vorteilhafte Ausgestaltungen erfindungsgemäßer Temperaturkonverter, erfindungsgemäßer elektrischer Maschinen, erfindungsgemäßer Werkzeugmaschinen, erfindungsgemäßer Systeme, sowie erfindungsgemäßer Verwendungen ergeben sich vorteilhaft durch Kombination einiger oder mehrerer beschriebener Merkmale.

Die oben beschriebenen Eigenschaften, Merkmale und Vorteile dieser Erfindung, sowie die Art und Weise, wie diese erreicht werden, werden klarer und deutlicher verständlich in Zusammenhang mit der folgenden Beschreibung der Ausführungsbeispiele, die anhand der Figuren näher erläutert werden.

Es zeigen:
- FIG 1: ein erstes Ausführungsbeispiel eines erfindungsgemäßen Temperaturkonverters,
- FIG 2: ein zweites Ausführungsbeispiel einer erfindungsgemäßen elektrischen Maschine mit einem zweiten Ausführungsbeispiel eines erfindungsgemäßen Temperaturkonverters,
- FIG 3: eine Projektion des zweiten Ausführungsbeispiels einer erfindungsgemäßen elektrischen Maschine mit dem zweiten Ausführungsbeispiel eines erfindungsgemäßen Temperaturkonverters,
- FIG 4: ein drittes Ausführungsbeispiel einer erfindungsgemäßen elektrischen Maschine mit einem dritten Ausführungsbeispiel eines erfindungsgemäßen Temperaturkonverters,
- FIG 5: eine Projektion eines vierten Ausführungsbeispiels einer erfindungsgemäßen elektrischen Maschine,
- FIG 6: ein erstes Ausführungsbeispiel einer erfindungsgemäßen Werkzeugmaschine,
- FIG 7: Ausführungsbeispiele erfindungsgemäßer Systeme zu einem Betrieb einer elektrischen Maschine.

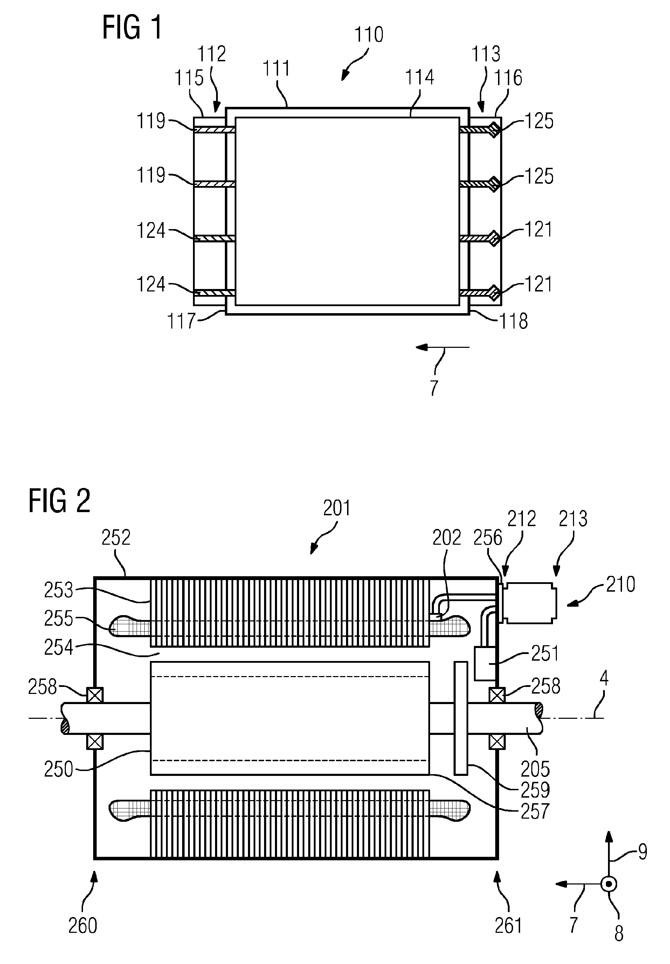

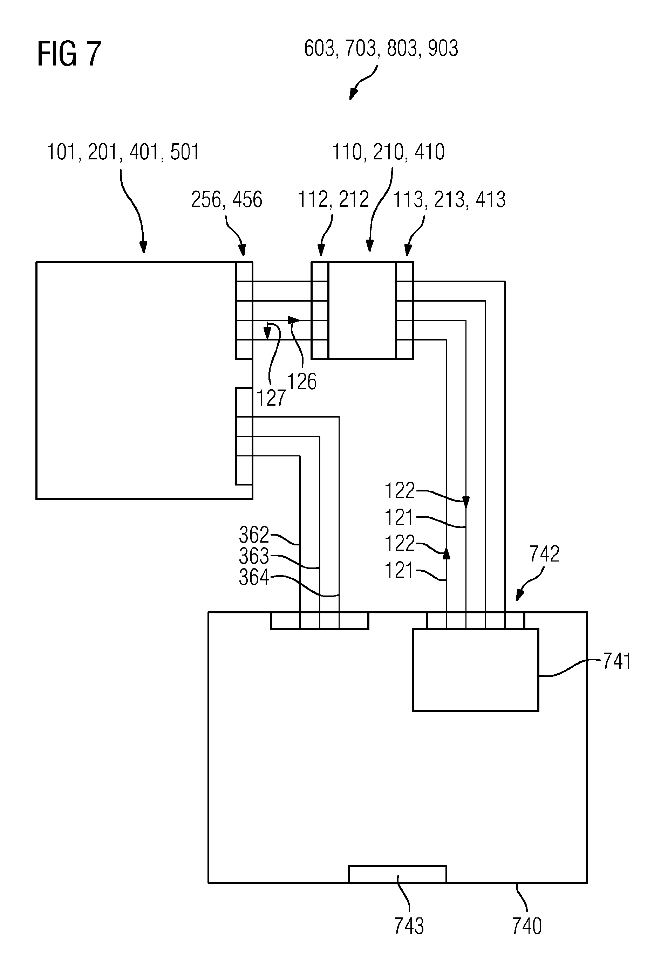

Figur 1 zeigt ein erstes Ausführungsbeispiel eines erfindungsgemäßen Temperaturkonverters 110 für eine elektrische Maschine 101 mit einem Temperatursensor eines ersten Typs, wobei der Temperaturkonverter 110 ein Gehäuse 111, das sich in einer ersten Richtung 7 erstreckt, und eine Eingangsschnittstelle 112 zum Verbinden mit dem Temperatursensor 202 der elektrische Maschine 101 für ein Messen einer Temperatur an einem Ort in der elektrischen Maschine 101 aufweist. Das erste Ausführungsbeispiel einer erfindungsgemäßen elektrischen Maschine 101 ist in Figur 7 gezeigt. Weiterhin weist der Temperaturkonverter 110 eine Ausgangsschnittstelle 113 zum Verbinden mit einer Auswerteeinrichtung 741 zur Auswertung eines Signals eines zweiten Temperatursensor-Typs und eine Konvertereinrichtung 114 zum Simulieren des zweiten Temperatursensor-Typs an der Ausgangsschnittstelle 113 in Abhängigkeit vom Strom- und/oder Spannungswert eines Eingangssignals vom Temperatursensor an der Eingangsschnittstelle 112 auf. Zum Simulieren des zweiten Temperatursensor-Typs ist in einem Betrieb des Temperaturkonverters 110 an der Ausgangsschnittstelle 113 ein Ausgangssignal vorhanden, dessen Spannungswert abhängig vom Spannungswert des Eingangssignals ist. Hierzu wird z.B. gemäß Figur 7 ein Strom 122 einer Konstantstromquelle an die Ausgangsschnittstelle 113 angelegt, wobei sich die Konstantstromquelle in der Auswerteeinheit 741 befindet. Im Betrieb des Temperaturkonverters 110 wird dann die Spannung zwischen zwei Leitern 121 der Ausgangsschnittstelle 113 gemessen. Die Messung erfolgt durch die Auswerteeinheit 741 und gibt Auskunft über den elektrischen Widerstand, der vom Temperaturkonverter 110 für die gemessene Temperatur an dem Ort in der elektrischen Maschine 101 vom Temperaturkonverter 110 simuliert wird. Zum elektrischen Verbinden weist der Temperaturkonverter 110 an der Eingangsschnittstelle 112 einen Steckverbinder 115 und an der Ausgangsschnittstelle 113 einen Steckverbinder 116 auf. Die Steckverbinder 115,116 gehören zu einem Verbindungssystem miteinander verbindbarer erster und zweiter Steckverbinder 115,116. Der Temperaturkonverter 110 weist an der Eingangsschnittstelle 112 einen ersten Steckverbinder 115 des Verbindungssystems und an der Ausgangsstelle 113 einen zweiten Steckverbinder 116 des Verbindungssytems auf. Der Temperaturkonverter 110 ist über die Eingangsschnittstelle 112 an die elektrische Maschine 101 befestigbar. Die Eingangsschnittstelle 112 dient somit nicht nur zum elektrischen Verbinden, sondern auch zum mechanischen Befestigen des Temperaturkonverters 110 an der elektrischen Maschine 101. Zum mechanischen Befestigen weisen die Steckverbinder des ersten Ausführungsbeispiels des Temperaturkonverters 110 Verbindungselemente einer formschlüssigen Verbindung auf. Bei dem Temperaturkonverter 110 erstreckt sich das Gehäuse 111 zwischen einer ersten 117 und einer zweiten Stirnseite 118 entlang der ersten Richtung 7, wobei die erste Stirnseite 117 die Eingangsschnittstelle 112 aufweist. Die Eingangsschnittstelle 112 weist Leiter 119 zur Energieversorgung eines Bauteils der elektrischen Maschine 101 auf. Der Temperaturkonverter 110 ist nur zum Simulieren des zweiten Temperatursensor-Typs hergestellt. Der Temperaturkonverter 110 weist keine Schalter, Konfigurierschnittstelle oder ähnliches auf, um den zweiten Temperatursensor-Typ ändern zu können. Die Konvertereinrichtung 114 weist keine Möglichkeit auf, nach der Herstellung des Temperaturkonverters 110 den zweiten Temperatursensor-Typ zu ändern. Der zweite Temperatursensor-Typ ist in der Konvertereinrichtung 114 in einem Festwertspeicher durch charakteristische Werte hinterlegt. Der Temperaturkonverter 110 erzeugt zum Simulieren des zweiten Temperatursensor-Typs zwischen den zwei Leitern 121 der Ausgangsschnittstelle 113 einen Widerstandswert, der einem Widerstandswert des zweiten Temperatursensor-Typs bei einer Temperatur entspricht, die von der Temperatur an dem Ort in der elektrischen Maschine 101 um maximal 10 k abweicht. Hierzu weist die Konvertereinrichtung 114 Wertepaare einer Kennlinie des Widerstandswerts des zweiten Temperatursensor-Typs abhängig von der Temperatur auf, wobei die Wertepaare die Kennlinie des zweiten Temperatursensor-Typs zum Simulieren des zweiten Sensortyps nachbilden, wobei der zweite Temperatursensor-Typ ein KTY-Temperatursensor ist, und zwar ein KTY 83. Die Konvertereinrichtung 114 weist dabei die Kennlinie des Widerstands bzw. die Wertepaare des zweiten Temperatursensor-Typs abhängig von der Temperatur auf, die bezüglich Fertigungsschwankungen bei dem Temperatursensor des ersten Typs minimale Abweichung der an dem Ort gemessenen Temperatur von der tatsächlichen Temperatur an dem Ort in der elektrischen Maschine 101 aufweist. Der Temperatursensor des ersten Typs ist ein NI1000. Im Betrieb des Temperaturkonverters 110 fließt ein Strom 126 einer Konstantstromquelle durch die Leiter 124 und damit durch den Temperatursensor des ersten Typs, wobei sich die Konstantstromquelle zumindest zum Teil in dem Temperaturkonverter 110 befindet. Die Konstantstromquelle oder deren Teil in dem Temperaturkonverter 110 ist mit Leitern 125 zur Energieversorgung an der Ausgangsschnittstelle 113 verbunden. Die zum Betrieb des Temperaturkonverters 110 und damit auch für den Strom 126 notwendige Energie erhält der Temperaturkonverter 110 über diese Leiter 125. Die Konvertereinrichtung 114 führt im Betrieb des Temperaturkonverters 110 eine A/D-Wandlung zur Ermittlung des gemessenen Spannungswerts einer Spannung 127 des Eingangssignals durch, die vom Temperaturkonverter 110 aufgrund des Stromes 126 und dem elektrischen Widerstand des Temperatursensors des ersten Typs an der Eingangsschnittstelle 112 zwischen den Leitern 124 als Eingangssignal gemessen wird. Die Konvertereinrichtung 114 ermittelt aus dem Spannungswert und dem bekannten Stromwert des Stromes 126 der Konstantstromquelle die mit dem Temperatursensor des ersten Typs an dem Ort in der elektrischen Maschine 101 gemessenen Temperatur, ermittelt aus der gemessenen Temperatur den zu dieser Temperatur gehörigen elektrischen Widerstandswert des zweiten Temperatursensor-Typs und stellt diesen elektrischen Widerstandswert über eine D/A-Wandlung zwischen den zwei Leitern 121 der Ausgangsschnittstelle 113 ein.

Figur 2 zeigt ein zweites Ausführungsbeispiel einer erfindungsgemäßen elektrischen Maschine 201 mit einem zweiten Ausführungsbeispiel eines erfindungsgemäßen Temperaturkonverters 210. Die Ausführungsbeispiele der Figur 2 weisen Merkmale auf, die anhand der Figuren 1 und 7 beschrieben wurden. Die Merkmale können mit Bezugszeichen versehen werden, die aus den Bezugszeichen der Figuren 1 und 7 durch Ersetzen der ersten Ziffer "1" durch "2" entstehen. In Figur 2 ist beispielhaft die Aufgangsschnittstelle mit dem Bezugszeichen 213 versehen worden; entsprechend kann die Beschreibung für die Ausgangsschnittstelle 113 des ersten Ausführungsbeispiels des Temperaturkonverters 110 der Figuren 1 und 7 auf die Ausgangsschnittstelle 213 des zweiten Ausführungsbeispiels des Temperaturkonverters 210 übertragen werden. Auf die unterschiedlichen Merkmale der Ausführungsbeispiele der Figur 2 wird nachfolgend eingegangen.

Die elektrische Maschine 201 mit einem Temperatursensor 202 eines ersten Typs umfasst den Temperaturkonverter 210 und weist eine Schnittstelle 256 an der elektrischen Maschine 201 zum Verbinden des Temperatursensors 202 des ersten Typs mit der Auswerteeinrichtung 741 auf. Bei dem ersten Ausführungsbeispiel der elektrischen Maschine 201 kann so der Temperaturkonverter 210 an der elektrischen Maschine 201 befestigt werden, ohne dass hierzu die elektrische Maschine 201 geöffnet werden muss. Der Temperaturkonverter 210 ist über seine Eingangsschnittstelle 212 an der elektrischen Maschine befestigbar 201. Wie in FIG 2 zu sehen, ist der Temperaturkonverter 201 über die Eingangsschnittstelle 212 an der elektrischen Maschine 201 befestigt. Die elektrische Maschine 201 weist außerdem den Temperatursensor 202 des ersten Typs einen Rotor 250 und einen Stator 253 auf, der in einem Betrieb der elektrischen Maschine 201 über einen Luftspalt 254 mit dem Rotor 250 magnetisch zusammenwirkt. Die Eingangsschnittstelle 212 des Temperaturkonverters 210 ist mit der Schnittstelle 250 der elektrischen Maschine 201 verbunden. Der Rotor 250 weist eine Einrichtung 257 auf, um über den Luftspalt mit einer am Stator 253 befestigten Wicklung 255 magnetisch zusammenwirken zu können. Die Einrichtung 257 weist bei dem zweiten Ausführungsbeispiel der elektrischen Maschine 201 Permanentmagnete auf. In dem ersten Ausführungsbeispiel einer erfindungsgemäßen elektrischen Maschine 101 ist die Einrichtung eine Kurzschlusswicklung. So ist die elektrische Maschine bei dem ersten Ausführungsbeispiel eine Asynchronmaschine mit einem Käfigläufer als Rotor. Bei dem zweiten Ausführungsbeispiel der elektrischen Maschine 201 ist der Temperatursensor 202 an einem Wicklungskopf der Wicklung 255 mit der Wicklung 255 vergossen. Zum magnetischen Zusammenwirken des Stators 253 mit dem Rotor 250 weist die elektrische Maschine 201 weitere an dem Stator 253 befestigte Wicklungen auf. Die elektrische Maschine 201 ist eine rotierende elektrische Maschine 201, bei der der Rotor 250 auf einer Welle 205 befestigt ist, die bei einem Betrieb der elektrischen Maschine 201 als Motor durch das magnetische Zusammenwirken des Stators 253 mit dem Rotor 250 um die Welle 205 in eine Drehbewegung um die Drehachse 4 versetzt wird. Die Welle 205 ist um die Drehachse 4 in einer ersten Lagervorrichtung 258 und einer zweiten Lagervorrichtung 258 um die Drehachse 4 in dem Gehäuse 250 drehbar gelagert. An der Welle 205 ist eine Scheibe 259 befestigt, die in Umfangsrichtung, d.h. um die Drehachse 4, unterschiedliche ferromagnetische Eigenschaften aufweist. So kann mit dem Bauteil 251 der elektrischen Maschine 201 die Position des Rotors 250 und gegebenenfalls dessen Geschwindigkeit mit dem Bauteil 251 ermittelt werden. Das Bauteil 251 ist beispielsweise ein induktiver Sensor 251. Das Bauteil 251 wird über die Leiter der Eingangsschnittstelle 212 mit Energie versorgt. Hierzu weist das zweite Ausführungsbeispiel des Temperaturkonverters 210 analog zu Leitern 125 des ersten Ausführungsbeispiels gemäß Figur 1 Leiter zur Energieversorgung des Bauteils 251 an der Ausgangsschnittstelle 213 auf. Der Temperaturkonverter 210 gemäß Figur 2 wird so analog zu der Energieversorgung des Temperaturkonverters 110 gemäß Figur 1 über die Leiter 125 mit Energie versorgt. Bei dem zweiten Ausführungsbeispiel des Temperaturkonverters 210 erzeugt dieser zum Simulieren des zweiten Temperatursensor-Typs zwischen zwei Leitern der Ausgangsschnittstelle 213 einen Widerstandswert, der einen Widerstandswert des zweiten Temperatursensor-Typs bei einer Temperatur entspricht, die von der Temperatur an dem Ort in der elektrischen Maschine 201 um 5 K abweicht.

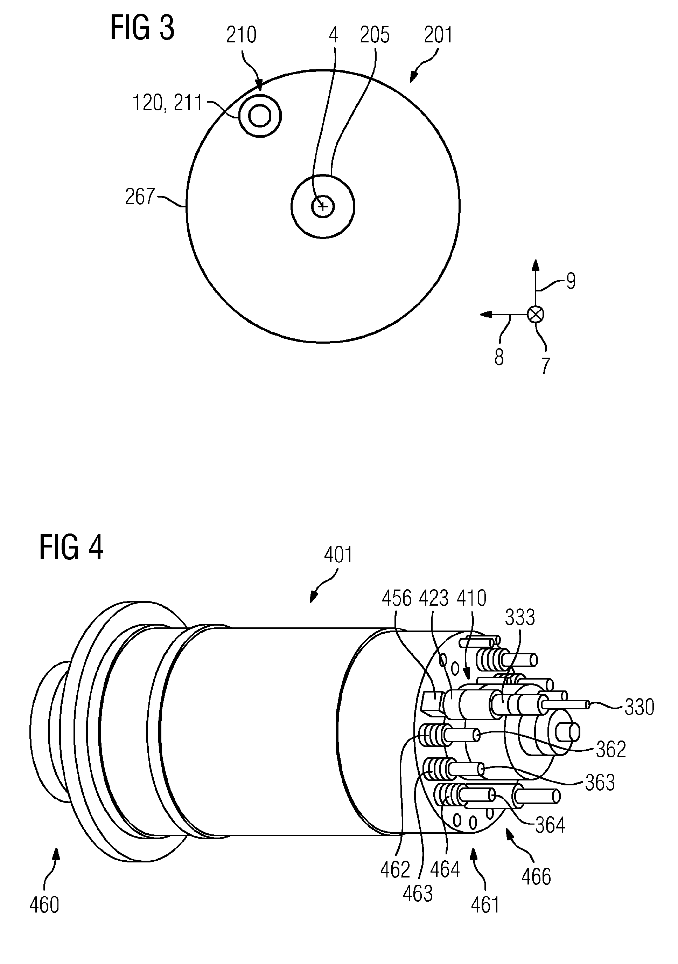

Figur 3 zeigt eine Projektion des zweiten Ausführungsbeispiels einer erfindungsgemäßen elektrischen Maschine 201 mit dem zweiten Ausführungsbeispiel eines erfindungsgemäßen Temperaturkonverters 210. Senkrecht zu der ersten Richtung 7 verlaufende Querschnittsflächen erstrecken sich in einer Ebene, die durch eine zweite Richtung 8 und eine dritte Richtung 9 aufgespannt sind. Die zweite Richtung 8 und die dritte Richtung 9 verlaufen senkrecht zu der ersten Richtung 7. Bei der elektrischen Maschine 201 erstreckt sich der Temperaturkonverter 210 innerhalb einer Hüllkurve 267, wobei de Hüllkurve 267 eine Hüllkurve einer Projektion aller Komponenten der elektrischen Maschine 201 in einer Richtung 7 ist. Bei der elektrischen Maschine 201, die eine rotierende elektrische Maschine ist, verläuft die erste Richtung 7 parallel zur Drehachse 4 der Welle 205 der rotierenden elektrischen Maschine. Der Temperaturkonverter 210 befindet sich so vorteilhaft weit von einem ersten Ende 260 der rotierenden elektrischen Maschine 201 entfernt, an dem die Welle 205 im Betrieb als Motor mechanische Energie abgibt. Wie in Figur 2 zu sehen, erstreckt sich das erste Ausführungsbeispiel einer elektrischen Maschine 201 von dem ersten Ende 260 der rotierenden elektrischen Maschine 201 entlang der ersten Richtung 7 zu einem zweiten Ende 261 der elektrischen Maschine 201. Bei dem Temperaturkonverter 210 weisen senkrecht zu der ersten Richtung 7 verlaufende Querschnittsflächen des Gehäuses 211 Hüllkurven 120 auf, die entlang der ersten Richtung 7 überwiegend identisch sind.

Figur 4 zeigt ein drittes Ausführungsbeispiel einer erfindungsgemäßen elektrischen Maschine 401 mit einem dritten Ausführungsbeispiel eines erfindungsgemäßen Temperaturkonverters 410. Die Ausführungsbeispiele der Figur 4 weisen Merkmale auf, die anhand der Figuren 1 bis 3 und 7 beschrieben wurden. Die Merkmale können mit Bezugszeichen versehen werden, die aus den Bezugszeichen der Figuren 1 bis 3 und 7 durch Ersetzen der ersten Ziffer "1" bzw. "2" durch "4" entstehen. In Figur 4 ist beispielhaft die Schnittstelle zum Verbinden des Temperatursensors des ersten Typs mit der Auswerteeinrichtung mit dem Bezugszeichen 456 versehen worden. Entsprechend kann die Beschreibung für die Schnittstelle 256 zum Verbinden des Temperatursensors 202 des ersten Typs mit der Auswerteeinrichtung 741 der Figuren 2 und 7 auf die Schnittstelle 456 des dritten Ausführungsbeispiels einer erfindungsgemäßen elektrischen Maschine 401 übertragen werden. Entsprechendes gilt für das dritte Ausführungsbeispiel eines erfindungsgemäßen Temperaturkonverters 410. Die elektrische Maschine 401 ist als eine Motorspindel ausgeführt. Der Temperaturkonverter ist über seine Eingangsschnittstelle an der elektrischen Maschine 401 befestigbar, indem die Eingangsschnittstelle eine Überwurfmutter 423 aufweist, die mit einem an der Schnittstelle 456 der elektrischen Maschine 401 vorhandenen Gewinde eine Schraubverbindung eingehen kann. Hierdurch werden die Leiter der Eingangsschnittstelle des Temperaturkonverters 410 zumindest vor einer mechanischen Beschädigung, dem Lösen der elektrischen Verbindung zwischen Temperaturkonverter 410 und elektrischer Maschine 401 und im begrenzten Maße gegen Staub und Sprühwasser vorteilhaft geschützt werden. Hierfür kann der Steckverbinder der Schnittstelle 456 der elektrischen Maschine 401 und/oder der Steckverbinder der Eingangsschnittstelle des Temperaturkonverters 410 eine Dichtung, z.B. einen O-Ring, aufweisen.

Der zweite Steckverbinder des Temperaturkonverters 410 an der Ausgangsschnittstelle weist ein Gewinde auf, das mit einer Überwurfmutter 333 eines Kabels 330 zum Verbinden des zweiten Temperatursensor-Typs mit der Auswerteeinrichtung 741 zusammenwirkt. So kann vorteilhaft da Kabel 330 weiterhin mit der elektrischen Maschine 401 trotz des dazwischen geschalteten Temperaturkonverters 410 verbunden und befestigt werden. Es ist vorteilhaft hierfür kein neues oder geändertes Kabel notwendig. Die Konvertereinheit des Temperaturkonverters 410 weist in dem dritten Ausführungsbeispiel Wertepaare einer typischen Kennlinie des Widerstandswerts des zweiten Temperatursensor-Typs abhängig von der Temperatur auf. Dabei sind die Wertepaare identisch mit der Kennlinie bzw. den Wertepaaren, die in der Auswerteeinrichtung 741 für den zweiten Temperatursensor-Typ vorhanden sind. Der zweite Temperatursensor-Typ ist ein KTY-Temperatursensor, und zwar ein KTY 84-130. Der Temperatursensor des ersten Typs ist ein PT1000. An dem zweiten Ende der rotierenden elektrischen Maschine 401, d.h. der Motorspindel, sind neben der Schnittstelle 456 zum Verbinden des Temperatursensors 202 weitere elektrische Anschlüsse und weitere Anschlüsse zum Betrieb der Motorspindel vorhanden. Die angedeuteten Kabel und Leitungen mit ihren Verbindungselementen, z.B. Steckverbinder, zur elektrischen Maschine 401 gehören dabei nicht zu der elektrischen Maschine 401, sondern sind nur für ein Verbinden mit einem System zu einem Betrieb der elektrischen Maschine 401 angedeutet. Beispielsweise weist die elektrische Maschine 401 Anschlüsse 462,463,464 zum Anschluss an die drei Phasen einer Drehphasen-Wechselstromquelle auf, wie sie z.B. in einer Regelungseinheit 740 durch einen Umrichter über die Kabel 362,363,364 zum Betrieb der elektrischen Maschine 401 zur Verfügung gestellt wird.

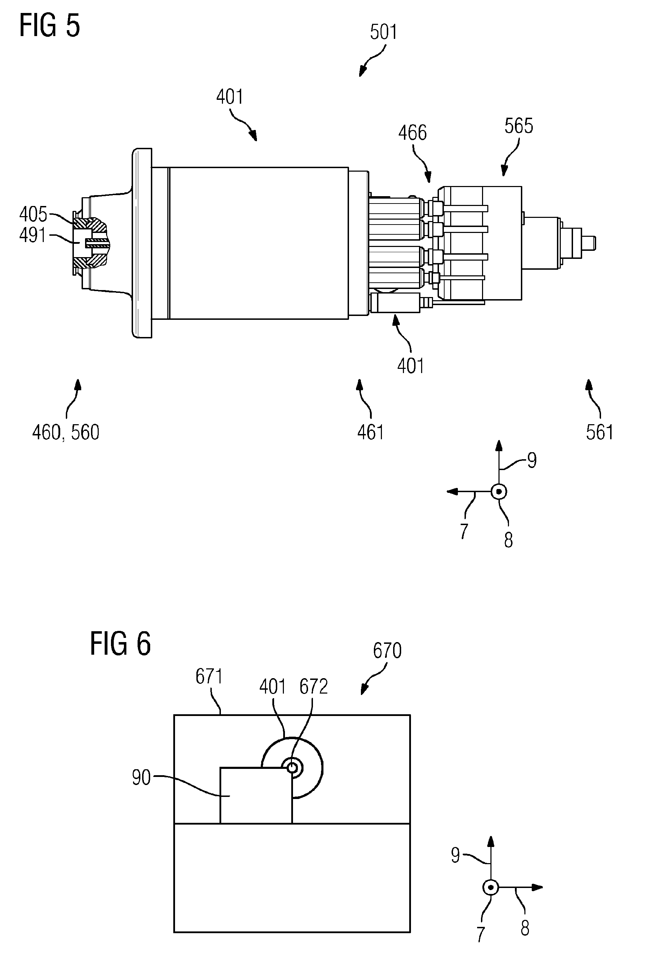

Figur 5 zeigt eine Projektion eines vierten Ausführungsbeispiels einer erfindungsgemäßen elektrischen Maschine 501. Die elektrische Maschine 501 umfasst die Merkmale des dritten Ausführungsbeispiels einer erfindungsgemäßen elektrischen Maschine 401 gemäß Figur 4. Da diese beiden Motorspindeln zu einer Serie von Motorspindeln gehören, die modular aufgebaut sind, d.h. z.B. eine Synchron- oder Asynchronmaschine sein können, unterschiedliche Leistungsklassen aufweisen können und optional an der elektrischen Maschine 401 an einer Erweiterungsschnittstelle 466 befestigbare Komponenten 565 umfassen können. Das vierte Ausführungsbeispiel der elektrischen Maschine 501 weist eine an der Erweiterungsschnittstelle 466 befestigte pneumatische Löseeinheit auf. Die pneumatische Löseeinheit 565 füllt einen Raum in der Hüllkurve nur teilweise aus. Die Hüllkurve erhält man dabei analog zu der Vorgehensweise bei dem ersten Ausführungsbeispiel einer erfindungsgemäßen elektrischen Maschine 201 gemäß Figur 3. Eine erste Erstreckung der elektrischen Maschine 501 gemäß Figur 5 erstreckt sich vom ersten Ende 560 der elektrischen Maschine 501 entlang der ersten Richtung 7 zu einem zweiten Ende 561. Dabei umfasst die erste Erstreckung auch alle optional an der elektrischen Maschine 501 an der Erweiterungsschnittstelle 466 befestigbare Komponenten. Das erste Ende der elektrischen Maschine mit der befestigten Komponente 565 fällt dabei mit dem ersten Ende der elektrischen Maschine 401 gemäß der Figur 4 zusammen. An dem ersten Ende der elektrischen Maschine 401 bzw. 501 weist die Welle 405 eine Ausnehmung 491 für einen Werkzeughalter auf. Der Temperaturkonverter 410 ist dadurch innerhalb der ersten Erstreckung vorhanden, dass die elektrische Maschine 501 eine pneumatische Löseeinheit als Komponente oder optionale Komponente aufweist, die einen Raum in der Hüllkurve nur teilweise ausfüllt.

Figur 6 zeigt ein erstes Ausführungsbeispiel einer erfindungsgemäßen Werkzeugmaschine 670, die einen erfindungsgemäßen Temperaturkonverter 410 und eine elektrische Maschine 401 umfasst, die in einer Öffnung einer Wand 671 der Werkzeugmaschine 670 eingeschoben ist. Die Öffnung erstreckt sich dabei in die erste Richtung 7 und stellt einen Bauraum für die elektrische Maschine 401, d.h. für die Motorspindel, zur Verfügung. In der ersten Richtung 7 befindet sich vor der Wand 671 ein Arbeitsbereich der Werkzeugmaschine 670, in dem sich ein Werkstück 90 befindet. Die elektrische Maschine 401 versetzt ein Werkzeug 672 in Bewegung, um an dem Werkstück 90 spanabhebend Material zu entfernen. Das Werkzeug 672 ist dabei in einem Werkzeughalter befestigt, der sich in der Ausnehmung 491 der Motorspindel 401 befindet.

Figur 7 zeigt Ausführungsbeispiele erfindungsgemäßer Systeme 603, 703, 803, 903 zu einem Betrieb einer elektrischen Maschine 101, 201, 401, 501. Nachfolgend werden die Systeme anhand eines Systems beschrieben, wobei Bezugszeichen aller Ausführungsbeispiele von Systemen angegeben werden, soweit die Merkmale in den Figuren 1 bis 7 mit Bezugszeichen versehen wurden. Das System 603, 703, 803, 903 umfasst den Temperaturkonverter 110, 210, 410, die elektrische Maschine 101, 201, 401, 501 und die Regelungseinrichtung 740, wobei die Regelungseinrichtung 740 die Auswerteeinrichtung 741 für die Auswertung des Signals des zweiten Temperatursensor-Typs aufweist. Die Auswerteeinrichtung 741 weist eine Schnittstelle 742 zum Verbinden des zweiten Temperatursensor-Typs mit der Auswerteeinrichtung 741 auf. Die Schnittstelle 256, 456 der elektrischen Maschine 101,201,401,501 ist mit der Eingangsschnittstelle 112, 212 des Temperaturkonverters 110, 210, 410 verbunden und die Ausgangsschnittstelle 113, 213, 413 des Temperaturkonverters 110, 210, 410 ist mit der Schnittstelle 742 der Auswerteeinrichtung 741 verbunden. Die Regelungseinrichtung 740 weist eine Schnittstelle 743 zur elektrischen Energieversorgung auf. Für einen Betrieb der elektrischen Maschine 101, 201, 401, 501 ist an der Schnittstelle 743 eine Drehphasen-Wechselstromquelle angeschlossen. Die Regelungseinheit 740 versorgt für einen Betrieb der elektrischen Maschinen 101, 201, 401, 501 diese mindestens über Leitungen 362, 363, 364 der Schnittstelle 743 mit elektrischer Energie. Dabei kann die Regelungseinrichtung 740 die elektrische Energieversorgung so regeln, dass Einflüsse einer Temperaturänderung an dem Ort in der elektrischen Maschine 101, 201, 401, 501 auf eine Drehzahl der elektrischen Maschine 101, 201, 401, 501 mit der Regelungseinrichtung 740 ausgeregelt werden. Die Auswerteeinrichtung 741 ist nur für die Auswertung des Signals des zweiten Temperatursensor-Typs programmiert.

Bei Ausführungsbeispielen von Verwendungen eines Tempertaturkonverters 110, 210, 410 gemäß den Ausführungsbeispielen der Figuren 1 bis 7 wird der Temperaturkonverter für die elektrische Maschine 101, 201, 401, 501 mit dem Temperatursensor 202 des ersten Typs zum Simulieren des zweiten Temperatursensor-Typs an der Ausgangsschnittstelle 113, 213, 413 des Temperaturkonverters in Abhängigkeit vom Strom- und/oder Spannungswert des Eingangssignals vom Temperatursensor 202 an der Eingangsschnittstelle des Temperaturkonverters 110, 210, 410 verwendet.

Obwohl die Erfindung im Detail durch die bevorzugten Ausführungsbeispiele näher beschrieben wurde, ist sie nicht auf die offenbarten Beispiele beschränkt. Andere Variationen können vom Fachmann jeweils abgeleitet werden, ohne den Schutzumfang der Erfindung zu verlassen.

## Patentansprüche

1. Temperaturkonverter (110,210,410) für eine elektrischen Maschine (101,201,401,501) mit einem Temperatursensor (202) eines ersten Typs, wobei der Temperaturkonverter (110,210, 410)
- ein Gehäuse (111), das sich in einer ersten Richtung (7) erstreckt,
- eine Eingangsschnittstelle (112,212) zum Verbinden mit dem Temperatursensor (202) der elektrischen Maschine (101,201,401,501) für ein Messen einer Temperatur an einem Ort in der elektrischen Maschine (101,201,401,501),
- eine Ausgangsschnittstelle (113,213,413) zum Verbinden mit einer Auswerteeinrichtung (741) zur Auswertung eines Signals eines zweiten Temperatursensor-Typs und
- eine Konvertereinrichtung (114) zum Simulieren des zweiten Temperatursensor-Typs an der Ausgangsschnittstelle (113,213,413) in Abhängigkeit vom Stromwert und/oder Spannungswert eines Eingangssignals vom Temperatursensor (202) an der Eingangsschnittstelle (112,212) aufweist.

2. Temperaturkonverter (110,210,410) nach Anspruch 1, wobei der Temperaturkonverter (110,210,410) Steckverbinder (115, 116) eines Verbindungssystems miteinander verbindbarer erster und zweiter Steckverbinder (115,116) umfasst, wobei der Temperaturkonverter (110,210,410) an der Eingangsschnittstelle (112,212) einen ersten Steckverbinder (115) des Verbindungssystems und an der Ausgangsschnittstelle einen zweiten Steckverbinder (116) des Verbindungssystems aufweist.

3. Temperaturkonverter (110,210,410) nach einem der vorhergehenden Ansprüche, wobei der Temperaturkonverter (110,210,410) über die Eingangsschnittstelle (112,212) an der elektrischen Maschine (101,201,401,501) befestigbar ist.

4. Temperaturkonverter (110,210,410) nach einem der vorhergehenden Ansprüche, wobei senkrecht zu der ersten Richtung (7) verlaufende Querschnittsflächen des Gehäuses (111) Hüllkurven (120) aufweisen, die entlang der ersten Richtung (7) überwiegend identisch sind.

5. Temperaturkonverter (110,210,410) nach einem der vorhergehenden Ansprüche, wobei sich das Gehäuse (11) zwischen einer ersten (117) und einer zweiten Stirnseite (118) des Temperaturkonverters entlang der ersten Richtung (7) erstreckt, wobei die erste Stirnseite (117) die Eingangsschnittstelle (112, 212) aufweist.

6. Temperaturkonverter (110,210,410) nach einem der vorhergehenden Ansprüche, wobei die Eingangsschnittstelle Leiter (119) zur Energieversorgung eines Bauteils (251) der elektrischen Maschine (101,201,401,501) aufweist.

7. Temperaturkonverter (110,210,410) nach einem der vorhergehenden Ansprüche, wobei der Temperaturkonverter (110,210,410) nur zum Simulieren des zweiten Temperatursensor-Typs hergestellt ist.

8. Temperaturkonverter (110,210,410) nach einem der vorhergehenden Ansprüche, wobei der Temperaturkonverter (110,210,410) zum Simulieren des zweiten Temperatursensor-Typs zwischen zwei Leitern (121) der Ausgangsschnittstelle (113,213,413) einen Widerstandswert erzeugt, der einem Widerstandswert des zweiten Temperatursensor-Typs bei einer Temperatur entspricht, die von der Temperatur an dem Ort in der elektrischen Maschine (101,201,401,501) um maximal 10 K, insbesondere 5 K, abweicht.

9. Temperaturkonverter (110,210,410) nach einem der vorhergehenden Ansprüche, wobei der zweite Temperatursensor-Typ ein KTY-Temperatursensor ist.

10. Elektrische Maschine (101,201,401,501) mit einem Temperatursensor (202) eines ersten Typs, umfassend einen Temperaturkonverter (110,210,410) nach einem der Ansprüche 1 bis 9, wobei die elektrische Maschine (101,201,401,501)
- den Temperatursensor (202) des ersten Typs,
- einen Rotor (250),
- einen Stator (253), der in einem Betrieb der elektrischen Maschine (101,201,401,501) über einen Luftspalt (254) mit dem Rotor (250) magnetisch zusammenwirkt, und
- eine Schnittstelle (256,456) zum Verbinden des Temperatursensors (202) des ersten Typs mit der Auswerteeinrichtung (741) aufweist,
wobei die Eingangsschnittstelle (112,212) des Temperaturkonverters (110,210,410) mit der Schnittstelle (256,456) der elektrischen Maschine (101,201,401,501) verbunden ist.

11. Elektrische Maschine (101,201,401,501) nach Anspruch 10, wobei sich der Temperaturkonverter (110,210,410) innerhalb einer Hüllkurve (267) erstreckt, wobei die Hüllkurve (267) eine Hüllkurve einer Projektion aller Komponenten der, insbesondere als eine Motorspindel ausgeführten, elektrischen Maschine (101,201,401,501) in einer Richtung (7) ist.

12. Werkzeugmaschine (670), umfassend einen Temperaturkonverter (410) nach einem der Ansprüche 1 bis 9, wobei die Werkzeugmaschine (670) eine elektrische Maschine (401) umfasst, die
- den Temperatursensor (202) des ersten Typs,
- einen Rotor (250),
- einen Stator (253), der in einem Betrieb der elektrischen Maschine (401) über einen Luftspalt (254) mit dem Rotor (250) magnetisch zusammenwirkt, und
- eine Schnittstelle (456) zum Verbinden des Temperatursensors (202) mit einer Auswerteeinrichtung (741) aufweist,
wobei die Eingangsschnittstelle des Temperaturkonverters (410) mit der Schnittstelle (456) der elektrischen Maschine (401) verbunden ist.

13. System (603,703,803,903) zu einem Betrieb einer elektrischen Maschine (101,201,401,501), umfassend einen Temperaturkonverter (110,210,410) nach einem der Ansprüche 1 bis 9, eine elektrische Maschine (101,201,401,501) und eine Regelungseinrichtung (740), wobei die elektrische Maschine (101,201, 401,501)
- den Temperatursensor (202) des ersten Typs,
- einen Rotor (250),
- einen Stator (253), der in einem Betrieb der elektrischen Maschine (101,201,401,501) über einen Luftspalt (254) mit dem Rotor (250) magnetisch zusammenwirkt, und
- eine Schnittstelle (256,456) zum Verbinden des Temperatursensors (202) mit der Auswerteeinrichtung (741) aufweist,
- wobei die Regelungseinrichtung (740) die Auswerteeinrichtung (741) für die Auswertung des Signals des zweiten Temperatursensor-Typs aufweist,
- wobei die Auswerteeinrichtung (741) eine Schnittstelle (742) zum Verbinden des zweiten Temperatursensor-Typs mit der Auswerteeinrichtung (741)aufweist,
- wobei die Schnittstelle (256,456) der elektrischen Maschine (101,201,401,501) mit der Eingangsschnittstelle (112,212) des Temperaturkonverters (110,210,410) verbunden ist und die Ausgangsschnittstelle (113,213,413) des Temperaturkonverters (110,210,410) mit der Schnittstelle (742) der Auswerteeinrichtung (741) verbunden ist.

14. System (603,703,803,903) nach Anspruch 13, wobei die Auswerteeinrichtung (741) nur für die Auswertung des Signals des zweiten Temperatursensor-Typs programmiert ist.

15. Verwendung eines Temperaturkonverters (110,210,410) nach einem der Ansprüche 1 bis 9, wobei der Temperaturkonverter (110,210,410) für die elektrische Maschine (101,201,401,501) mit dem Temperatursensor (202) des ersten Typs zum Simulieren des zweiten Temperatursensor-Typs an der Ausgangsschnittstelle (113,213,413) des Temperaturkonverters (110,210,410) in Abhängigkeit vom Stromwert und/oder Spannungswert des Eingangssignals vom Temperatursensor (202) an der Eingangsschnittstelle (112,212) des Temperaturkonverters (110,210, 410) verwendet wird.
